# EUROPÄISCHE PATENTSCHRIFT

(11) **EP 3 729 009 B1**
(45) Veröffentlichungstag und Bekanntmachung des Hinweises auf die Patenterteilung: **08.03.2023**
(21) Anmeldenummer: 18807974.3
(22) Anmeldetag: 23.11.2018
(51) Int. Cl.: G01F 1/69, G01F 1/688, G01F 1/684, G01F 1/696, G01P 5/12, G01K 7/16, G01K 7/18, G01K 13/02

(54) **THERMISCHER STRÖMUNGSSENSOR ZUM BESTIMMEN DER TEMPERATUR UND DER STRÖMUNGSGESCHWINDIGKEIT EINES STRÖMENDEN MESSMEDIUMS**
THERMAL FLOW SENSOR FOR DETERMINING THE TEMPERATURE AND THE FLOW SPEED OF A FLOWING MEASUREMENT MEDIUM
CAPTEUR D'ÉCOULEMENT THERMIQUE SERVANT À DÉFINIR LA TEMPÉRATURE ET LA VITESSE D'ÉCOULEMENT D'UN MILIEU DE MESURE S'ÉCOULANT

(30) Priorität: 21.12.2017 DE 102017130950
(43) Veröffentlichungstag der Anmeldung: 28.10.2020
(73) Patentinhaber: Innovative Sensor Technology IST AG, 9642 Ebnat-Kappel (CH)
(72) Erfinder: CIESLA, Tomasz, 8645 Jona (CH); HEPP, Christoph, 9535 Wilen bei Wil (CH)
(74) Vertreter: Trenkle, Dennis
(86) Internationale Anmeldenummer: PCT/EP2018/082314
(87) Internationale Veröffentlichungsnummer: WO 2019/120873

(56) Entgegenhaltungen:
- WO-A1-2007/063110
- WO-A1-2018/041473
- WO-A2-2010/136351
- US-A1- 2002 130 780
- US-A1- 2003 233 860
- US-A1- 2006 267 724

## Beschreibung

Die Erfindung betrifft einen thermischen Strömungssensor zum Bestimmen der Temperatur und der Strömungsgeschwindigkeit eines strömenden Messmediums. Des Weiteren betrifft die Erfindung ein Verfahren zur Bestimmung der Temperatur und der Strömungsgeschwindigkeit eines Messmediums mittels eines erfindungsgemäßen thermischen Strömungssensors, sowie ein Sensorsystem umfassend einen solchen thermischen Strömungssensor und einen weiteren Sensortyp.

Zur Bestimmung eines Durchflusses, bzw. der Strömungsgeschwindigkeit eines Messmediums, bzw. eines Fluides, beispielsweise eines Gases oder Gasgemisches sind thermische Strömungssensoren bekannt. Diese nutzen aus, dass ein (strömendes) Messmedium Wärme von einer beheizten Fläche abtransportiert. Thermische Strömungssensoren bestehen typischerweise aus mehreren Funktionselementen, üblicherweise zumindest aus einem niederohmigen Heizelement und einem hochohmigen Widerstandselement, welches als Temperatursensor dient. Alternativ sind thermische Strömungssensoren mit mehreren niederohmigen Heizelementen als Heizer und Temperatursensor aufgebaut.

Kalorimetrische thermische Strömungssensoren bestimmen über eine Temperaturdifferenz zwischen zwei Temperatursensoren, welche flussabwärts (engl. "downstream") und flussaufwärts (engl. "upstream") von einem Heizelement angeordnet sind, den Durchfluss bzw. die Flussrate des Fluids in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen aus zumindest einem Heizelement, welches während der Messung des Durchflusses erhitzt wird. Durch die Umströmung des Heizelements mit dem Messmedium findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Ein solcher anemometrischer thermischer Strömungssensor wird typischerweise in einem der folgenden beiden Regelarten betrieben:
Bei der Regelart "Constant-Current Anemometry (CCA) wird das Heizelement mit einem konstanten Strom beaufschlagt. Durch die Umströmung mit dem Messmedium ändert sich der Widerstand des Heizelements und damit die am Heizelement abfallende Spannung, welche das Messsignal darstellt.

Bei der Regelart "Constant-Temperature Anemometry (CTA)" wird das Heizelement auf einer im Mittel konstanten Temperatur gehalten. Hierfür wird das Heizelement entweder intervallartig mit konstante Leistungspulsen beaufschlagt, deren Frequenz sich mit steigender Strömungsgeschwindigkeit erhöht. Alternativ wird der Wert des in das Heizelement eingespeisten Stroms, bzw. der eingespeisten Spannung, mit steigender Strömungsgeschwindigkeit erhöht. Mittels dieser Regelart sind relativ hohe Strömungsgeschwindigkeiten messbar.

Nachteilig bei den bisher bekannten thermischen Strömungssensoren ist, dass mindestens zwei Funktionselemente - ein Heizelement und ein Temperatursensor - benötigt werden. Dadurch sind der Platzbedarf sowie die Fertigungskosten solcher thermischen Strömungssensoren erhöht. Ausgehend von dieser Problematik liegt der Erfindung die Aufgabe zugrunde, einen thermischen Strömungssensor aufzuzeigen, welcher eine kompakte Bauform aufweist, sowie ein Verfahren zum Betreiben eines solchen thermischen Strömungssensors aufzuzeigen.

US 2002/130780 A1 beschreibt ein Beispiel für einen Wärmedispersions-Massendurchflusssensor zur Bestimmung der Durchflussmenge und des Flüssigkeitsstands in einer berührungslosen Vorrichtung. Ein Temperatursensor besteht aus einem rasterförmigen elektrischen Leiter, der auf einem dünnen, elektrisch isolierenden, wärmeleitenden flachen Chip aufgebracht ist. Ein Temperatursensor wird periodisch selbst beheizt und fungiert sowohl als Referenz als auch als aktiver oder beheizter Sensor. Alle Ausführungen verwenden einen Miniatur-Temperatursensor mit selbstbeheiztem Fühlerelement.

Die Aufgabe wird durch einen thermischen Strömungssensor zum Bestimmen der Temperatur und der Strömungsgeschwindigkeit eines strömenden Messmediums gemäß Anspruch 1 gelöst.

Durch Nutzung von lediglich einem Funktionselement ist der Platzbedarf des erfindungsgemäßen thermischen Strömungssensors gegenüber einem Strömungssensors, welcher aus dem Stand der Technik bekannt ist und welcher zwei Funktionselemente nutzt, reduziert. Auch die Fertigungskosten für einen solchen erfindungsgemäßen thermischen Strömungssensor sind reduziert. Als Funktionselement wird beispielweise eine einzelne Struktur eines Bauteils bezeichnet, welche zum Beheizen oder Abkühlen des Messmediums dient und zum Bestimmen der Temperatur des Messmediums dient. Insbesondere ist das Funktionselement eine einzelne Schicht, welche auf einem Substrat aufgetragen ist. Als Funktionselement kann aber auch ein gesamtes Bauteil bezeichnet werden, wenn es zum Beeinflussen der Temperatur des Messmediums und zum Bestimmen der Temperatur des Mediums dieselbe Struktur/dasselbe Element verwendet.

Als Beeinflussen der Temperatur des Messmediums wird ein Heizen des Messmediums oder ein Abkühlen des Messmediums bezeichnet.

Der erfindungsgemäße thermische Strömungssensor gibt zwei Prozessvariablen aus: Die aktuelle Temperatur des Messmediums und die aktuelle Strömungsgeschwindigkeit des Messmediums. Hierfür wird der thermische Strömungssensor getaktet in zwei Zeitintervallen betrieben, welche sich abwechseln. In einem ersten Zeitintervall wird die Temperatur des Messmediums bestimmt; in einem zweiten Zeitintervall wird die Strömungsgeschwindigkeit des Messmediums bestimmt. Die Dauer der Zeitintervalle sind dabei abhängig von dem Aufbau des thermischen Strömungssensors, insbesondere von der durch den Aufbau des thermischen Strömungssensors bedingten Wärmeübertragung von dem Funktionselement in das Messmedium und vice versa, und der Art des Messmediums. Die Dauer der Zeitintervalle wird insbesondere so gewählt, dass die jeweilige Messgröße mit einer vorbestimmten Genauigkeit bestimmt werden kann. In experimentellen Versuchen mit einer Platinschicht als Funktionselement hat sich eine jeweilige Dauer von 10 Sekunden für beide Zeitintervalle als vorteilhaft erwiesen. Beachtet werden muss jedoch, dass eine zeitliche Änderung der Temperatur unter der gemeinsamen Gesamtdauer beider Zeitintervalle liegen muss, um verlässliche Messwerte der Strömungsgeschwindigkeit erhalten zu können.

Der Begriff Strömungsgeschwindigkeit, auch Fließgeschwindigkeit oder Flussgeschwindigkeit genannt, stellt einen Oberbegriff für verschiedene Angaben des gemessenen Flusses dar. So umfasst der Begriff Strömungsgeschwindigkeit beispielsweise den Massestrom und/oder den Volumenstrom des Messmediums.

In einer ersten Variante des erfindungsgemäßen thermischen Strömungssensors ist vorgesehen, dass die Regel- und Auswerteeinheit dazu ausgestaltet ist, in dem zweiten Zeitintervall das Funktionselement derart mit einer elektrischen Größe zu beaufschlagen, dass das Funktionselement eine Messtemperatur, welche um eine vorbestimmte Differenz verschieden zur Temperatur des Messmediums ist, aufweist, und anhand der zum Erreichen der Messtemperatur des Funktionselements erforderlichen elektrischen Größe die Strömungsgeschwindigkeit des Messmediums zu ermitteln. Dies entspricht der Regelart "Constant-Temperature Anemometry (CTA)". Hierfür benötigt die Elektronikeinheit die aktuelle Temperatur des Messmediums, welche im ersten Zeitintervall bestimmt wird.

In einer zweiten Variante des erfindungsgemäßen thermischen Strömungssensors ist vorgesehen, dass die Regel- und Auswerteeinheit dazu ausgestaltet ist, in dem zweiten Zeitintervall das Funktionselement zumindest zeitweise mit einem definierten Betrag einer elektrischen Größe zu beaufschlagen, nach dem Beaufschlagen des Funktionselements mit dem definierten Betrag der elektrischen Größe die Temperatur des Funktionselements zu erfassen, und anhand der Höhe der Temperatur des Funktionselements die Strömungsgeschwindigkeit des Messmediums zu ermitteln. Zur Berechnung der Strömungsgeschwindigkeit wird der Betrag der Differenz zwischen der Temperatur des Funktionselements nach Beaufschlagen der elektrischen Größe und der Temperatur des Messmediums. Je höher die aktuelle Strömungsgeschwindigkeit des Messmediums ist, desto geringer ist der Betrag der Differenz. Die Temperatur des Messmediums, welche zur Berechnung des Betrags der Differenz benötigt wird, wird im ersten Zeitintervall bestimmt.

Gemäß einer bevorzugten Ausgestaltung des erfindungsgemäßen thermischen Strömungssensors ist vorgesehen, dass es sich bei der Regel- und Auswerteeinheit um einen PC oder um eine Bedieneinheit handelt. Bei der Bedieneinheit kann es sich auch um eine mobile Bedieneinheit in Form eines mobilen Endgeräts, beispielsweise ein Smartphone oder ein Tablet handeln. Es ist insbesondere vorgesehen, dass die Regel- und Auswerteeinheit nicht permanent mit dem Funktionselement verbunden ist und nur zum Betrieb des thermischen Strömungssensors mit dem Funktionselement verbunden wird.

Gemäß einer bevorzugten alternativen Ausgestaltung des erfindungsgemäßen thermischen Strömungssensors ist vorgesehen, dass es sich bei der Regel- und Auswerteeinheit um eine elektronische Sensorschaltung handelt, welche einen Mikroprozessor oder einen Operationsverstärker aufweist. Die elektronische Sensorschaltung ist insbesondere permanent mit der Funktionseinheit verbunden, beispielsweise verdrahtet.

Gemäß einer vorteilhaften Ausgestaltung des erfindungsgemäßen thermischen Strömungssensors ist vorgesehen, dass der Mikroprozessor, bzw. der Operationsverstärker, zum Regeln der dem Funktionselement zu beaufschlagenden elektrischen Größe ausgestaltet ist. Es kann sich aber auch um ein alternatives Elektronikbauteil handeln, mit welchem die Regelung der elektrischen Größe und die Auswertung möglich ist, beispielsweise ein ASIC.

Gemäß einer vorteilhaften Ausgestaltung des thermischen Strömungssensors ist vorgesehen, dass die elektronische Sensorschaltung einen Spannungsteiler oder eine Brückenschaltung zum Bestimmen des Widerstandswerts des Funktionselements umfasst.

Eine vorteilhafte Weiterbildung des erfindungsgemäßen thermischen Strömungssensors sieht vor, dass das Funktionselement derart ausgestaltet ist, dass es durch Beaufschlagen der elektrischen Größe eine Messtemperatur aufweist, welche niedriger als die ermittelte Temperatur des Messmediums ist. Hierbei ist vorgesehen, dass die Temperatur des Funktionselements mit zunehmendem Betrag der elektrischen Größe sinkt.

Beispielsweise handelt es sich bei dem Funktionselement um ein Peltierelement. Ein Peltierelement ist ein elektrothermischer Wandler und besteht aus zwei Materialien, insbesondere zwei Halbleitern, welche eine Berührungsfläche aufweisen. Durch Beaufschlagen mit einer elektrischen Größe,

insbesondere einem elektrischen Strom wird eine Temperaturdifferenz zwischen den beiden Materialien erzeugt. Typischerweise ist ein Peltierelement derart ausgestaltet, dass es bei Beaufschlagung mit der elektrischen Größe eine warme Seite und eine kalte Seite aufweist. Im Zusammenhang mit dem erfindungsgemäßen thermischen Strömungssensor muss das Peltierelement derart verbaut werden, dass dessen kalte Seite einen thermischen Kontakt zu dem Messmedium besitzt und dass die durch warme Seite erzeugte Wärme aus dem thermischen Strömungssensor abtransportiert wird, beispielsweise durch eine Kupferleitung, etc. Alternativ zu einem Peltierelement können auch weitere elektrische Kühlelemente, welche zum kurzzeitigen Kühlen des Messmediums geeignet sind, verwendet werden.

Eine vorteilhafte alternative Weiterbildung des erfindungsgemäßen thermischen Strömungssensors sieht vor, dass das Funktionselement derart ausgestaltet ist, dass es durch Beaufschlagen der elektrischen Größe eine Messtemperatur aufweist, welche höher als die ermittelte Temperatur des Messmediums ist. Hierbei ist vorgesehen, dass die Temperatur des Funktionselements mit zunehmendem Betrag der elektrischen Größe ansteigt.

Gemäß einer vorteilhaften Ausgestaltung des thermischen Strömungssensors Verfahrens ist vorgesehen, dass es sich bei dem Funktionselement um ein Widerstandsthermometer handelt, welches einen definierten Zusammenhang zwischen der Temperatur und des Widerstandswerts des Widerstandsthermometers aufweist.

Gemäß einer bevorzugten Ausgestaltung des thermischen Strömungssensors Verfahrens ist vorgesehen, dass das Funktionselement im Wesentlichen aus einem Material mit einem definierten Temperaturkoeffizienten, insbesondere Platin, Nickel, oder Polysilizium, besteht. Als vorteilhaft haben sich insbesondere PT50- bis PT200-Temperatursensoren erwiesen.

Erfindungsgemäß ist vorgesehen, dass der thermische Strömungssensor ein Trägerelement aufweist, in welches das Funktionselement eingebracht ist, wobei das Trägerelement mit dem Messmedium in Kontakt steht. Hierbei handelt es sich insbesondere um ein metallisches Röhrchen mit einem abgeschlossenen Endbereich. Das Röhrchen ist in das Messmedium eingetaucht, insbesondere senkrecht zur Strömungsrichtung. Das Messmedium durchströmt beispielsweise eine Rohrleitung, kann aber auch offen fließen. Mit diesem Endbereich ist das Funktionselement in thermischen Kontakt. Bedingt durch das Röhrchen ist das Funktionselement nicht in Kontakt mit dem Messmedium.

Im Falle, dass das Messmedium eine Rohrleitung durchströmt kann das Funktionselement alternativ zum Einbringen in ein Röhrchen auch direkt mit der Rohrleitung in thermischen Kontakt gebracht sein.

Gemäß der Erfindung ist vorgesehen, dass der thermische Strömungssensor ein Substrat mit einem ersten Wärmewiderstandswert, mit einer dem Messmedium zugewandten Oberfläche und mit einer dem Messmedium abgewandten Oberfläche aufweist. Das Funktionselement ist auf dem Substrat aufgebracht, beispielsweise mittels einer Dünnschicht- oder Dickschichttechnik. Das Substrat besteht im Wesentlichen aus einem keramischen Material, beispielsweise Aluminiumoxid oder Zirkonoxid. Alternativ besteht das Substrat im Wesentlichen aus einem Halbleitermaterial oder aus einem metallischen Material.

Erfindungsgemäß ist vorgesehen, dass das Funktionselement auf der dem Messmedium zugewandten Oberfläche des Substrats aufgebracht ist, wobei auf dem Funktionselement eine Passivierungsschicht mit einem zweiten Wärmewiderstandswert aufgetragen ist, und wobei der erste Wärmewiderstandswert des Substrats im Wesentlichen um einen Faktor von zumindest 10 größer ist als der zweite Wärmewiderstandswert der Passivierungsschicht. Durch diese Anordnung wird das Sensorelement hinsichtlich Wärmeübertragung von dem Sensorelement zu einem Messmedium und umgekehrt optimiert. In Richtung der Seite des Messmediums weist das Sensorelement lediglich einen sehr geringen thermischen Widerstand auf, während in Richtung der dem Messmedium abgewandten Oberfläche ein hoher thermischer Widerstand vorliegt. Der Vorteil des erfindungsgemäßen Sensorelements liegt darin, dass eine gute Wärmeübertragung von dem Sensorelement zu dem Messmedium und vice versa erreicht wird.

Zur qualitativen Analyse der Wärmeübertragung wird die Biot-Zahl verwendet. Die Biot-Zahl ist eine dimensionslose Kennzahl der Thermodynamik und der Strömungsmechanik. Sie wird für die Berechnung von Erwärmungs- und Abkühlungsvorgängen verwendet und gibt beim Wärmetransport durch die Oberfläche eines Körpers das Verhältnis des Wärmeleitwiderstandes eines Körpers zum Wärmeübergangswiderstand des umgebenden Messmediums an.

Eine hohe Biot-Zahl, besagt, dass Temperaturunterschiede innerhalb des festen Körpers größer sind als in der Grenzschicht zum umgebenden Messmedium. Durch einen Aufbau des thermischen Strömungssensors gemäß dem vorliegenden Ausführungsbeispiel wird die Biot-Zahl verringert.

Gemäß der Erfindung ist vorgesehen, dass auf der Passivierungsschicht eine lötbare Schicht aufgetragen ist, mittels derer das Sensorelement an dem Trägerelement anbringbar ist. Dies führt zu einer weiteren Verringerung der Biot-Zahl, da die lötbare Schicht auf der Passivierungsschicht mit dem Trägerelement in unmittelbarem Kontakt steht.

Des Weiteren wird die Aufgabe durch ein Sensorsystem gelöst, umfassend einen erfindungsgemäßen thermischen Strömungssensor und zumindest ein weiteres Sensorelement, wobei die Regel- und Auswerteeinheit derart ausgestaltet ist, den thermischen Strömungssensor und das zumindest eine weitere Sensorelement anzusteuern, die Temperatur und die Strömungsgeschwindigkeit des Messmediums mittels des thermischen Strömungssensors zu bestimmen und zumindest eine weitere physikalische Messgröße mittels des zumindest einen weiteren Sensorelements zu bestimmen. Die Regel- und Auswerteeinheit wird gemeinsam für beide Sensorelemente, also sowohl für den thermischen Strömungssensor als auch für das weitere Sensorelement, verwendet. Es ist vorgesehen, dass jedes der Sensorelemente ein eigenes Substrat und/oder ein eigenes Röhrchen aufweist und auch beabstandet voneinander angeordnet sein kann. Bei dem weiteren Sensorelement handelt es sich um einen zum thermischen Strömungssensor verschiedenen Sensortyp. Der Bediener erhält dadurch zusätzlich zu den Messwerten der Prozessvariablen Temperatur und Strömungsgeschwindigkeit weitere Werte zu zusätzlichen Prozessvariablen des Messmediums, bzw. des Prozesses.

Es kann allerdings auch vorgesehen sein, dass das Sensorsystem als weiteres Sensorelement einen oder mehrere erfindungsgemäße thermische Strömungssensoren aufweist. Diese können beispielsweise entlang eine Rohrleitung angeordnet sein und den Verlauf der Strömungsgeschwindigkeit entlang der Rohrleitung erfassen und/oder gemessene Werte der Strömungsgeschwindigkeit gegenseitig validieren.

In einer ersten Variante des erfindungsgemäßen Sensorsystems ist vorgesehen, dass es sich bei dem weiteren Sensorelement um einen Leitfähigkeitssensor handelt und wobei es sich bei der weiteren physikalischen Messgröße um einen Leitfähigkeitswert des Messmediums handelt In einer zweiten Variante des erfindungsgemäßen Sensorsystems ist vorgesehen, dass es sich bei weiteren Sensorelement um einen Feuchtesensor handelt und wobei es sich bei der weiteren physikalischen Messgröße um einen Feuchtewert handelt.

Des Weiteren wird die Erfindung durch ein Verfahren zur Bestimmung der Temperatur und der Strömungsgeschwindigkeit eines Messmediums gemäß Anspruch 13 gelöst.

Das Messen der Temperatur, bzw. das Bestimmen der Strömungsgeschwindigkeit des Messmediums, sowie das jeweilige Ansteuern des Prozessmediums wird von einer Regel- und Auswerteeinheit übernommen, welche zumindest für den Zeitraum des Betriebs des thermischen Strömungssensors mit dem Funktionselement elektrische kontaktiert ist.

In einer ersten Variante des erfindungsgemäßen Verfahrens ist vorgesehen, dass das Funktionselement im zweiten Zeitintervall derart mit einer elektrischen Größe beaufschlagt wird, dass ein vordefinierter Unterschied zwischen der aktuellen Temperatur des Funktionselements und der im ersten Intervall gemessenen Temperatur des Messmedium erzielt ist, und wobei die Strömungsgeschwindigkeit des Messmediums anhand der Höhe der dem Funktionselement beaufschlagten elektrischen Größe bestimmt wird. Dies entspricht der Regelart "Constant-Temperature Anemometry (CTA)". Hierfür benötigt die Elektronikeinheit die aktuelle Temperatur des Messmediums, welche im ersten Zeitintervall bestimmt wird.

In einer ersten Variante des erfindungsgemäßen Verfahrens ist vorgesehen, dass das Funktionselement im zweiten Zeitintervall mit einem definierten Betrag einer elektrischen Größe beaufschlagt wird, wobei nach dem Beaufschlagen die Temperatur des Funktionselements gemessen wird und wobei die Strömungsgeschwindigkeit des Messmediums anhand der Höhe der gemessenen Temperatur des Funktionselements bestimmt wird. Zur Berechnung der Strömungsgeschwindigkeit wird der Betrag der Differenz zwischen der Temperatur des Funktionselements nach Beaufschlagen der elektrischen Größe und der Temperatur des Messmediums. Je höher die aktuelle Strömungsgeschwindigkeit des Messmediums ist, desto geringer ist der Betrag der Differenz. Die Temperatur des Messmediums, welche zur Berechnung des Betrags der Differenz benötigt wird, wird im ersten Zeitintervall bestimmt.

Die Erfindung wird anhand der nachfolgenden Figuren näher erläutert. Es zeigt
Fig. 1: ein Ausführungsbeispiel eines erfindungsgemäßen thermischen Strömungssensors;
Fig. 2: ein Beispiel für eine Anwendung eines erfindungsgemäßen thermischen Strömungssensors;
Fig. 3a: ein Ausführungsbeispiel für ein Funktionselement in einem nicht erfindungsgemäßen thermischen Strömungssensor;
Fig. 3b: ein Ausführungsbeispiel für ein Funktionselement, welches in einem erfindungsgemäßen thermischen Strömungssensor eingesetzt wird;
Fig. 4: eine erste Ausgestaltung einer Regel-/Auswerteeinheit für einen erfindungsgemäßen thermischen Strömungssensor; und
Fig. 5: eine zweite Ausgestaltung einer Regel-/Auswerteeinheit für einen erfindungsgemäßen thermischen Strömungssensor.

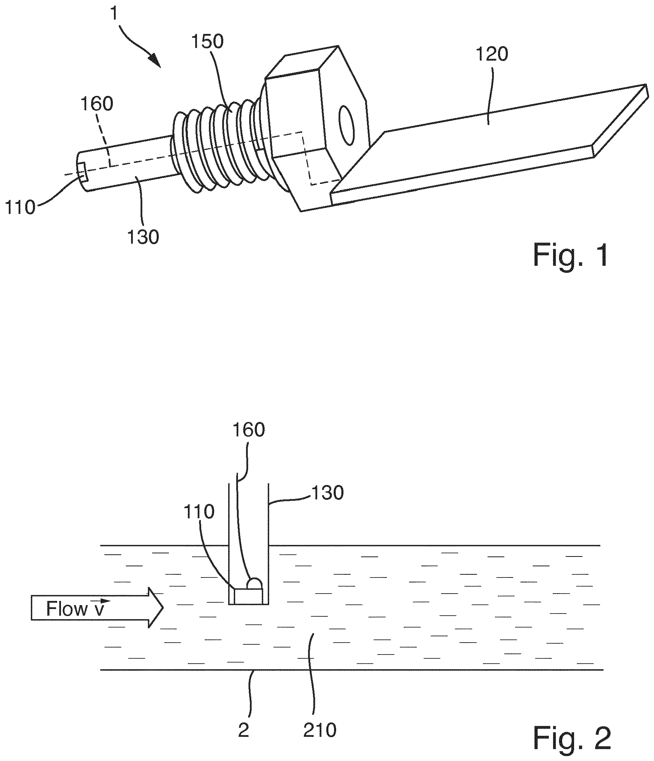

Fig. 1 zeigt ein Ausführungsbeispiel eines erfindungsgemäßen thermischen Strömungssensors 1. Der thermische Strömungssensor besteht im Grunde genommen aus zwei Komponenten.

Die erste Komponente des thermischen Strömungssensors 1 ist ein Funktionselement 110. Dieses Funktionselement 110 ist in das Innere eines Trägerelements 130, in Form eines Röhrchens, eingebracht und auf dem abgeschlossenen Boden des Röhrchens 130 aufgebracht.

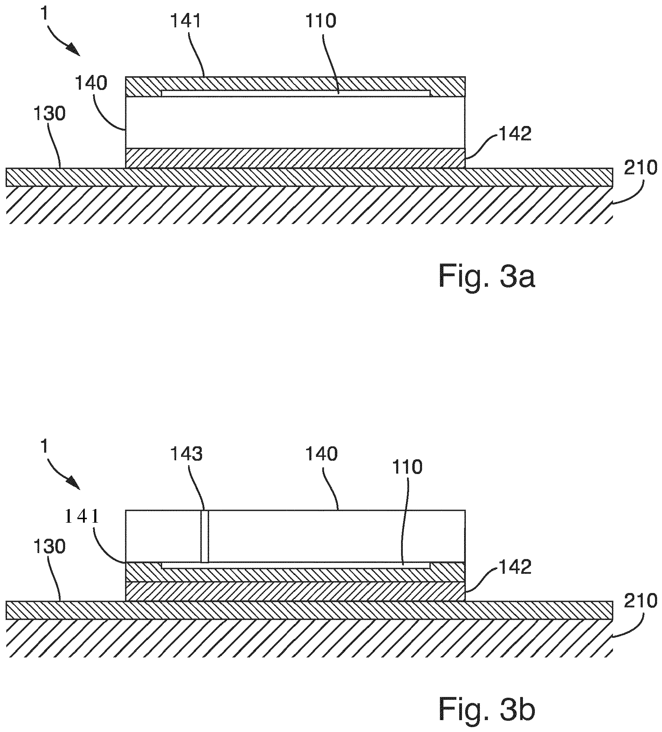

Eine erfindungsgemäße Ausgestaltung des Röhrchens wird in der Figur Fig. 3b näher erläutert.

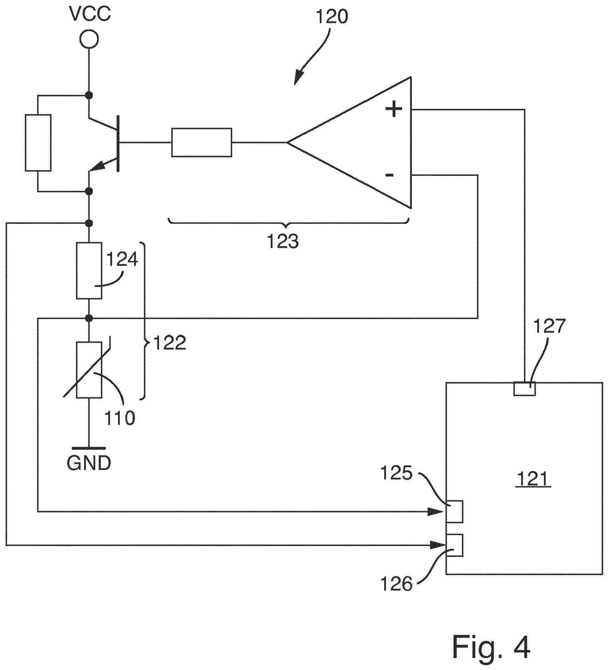

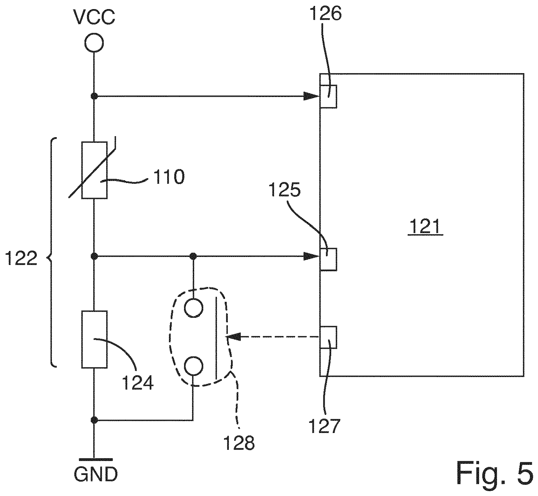

Die zweite Komponente des thermischen Strömungssensors 1 ist eine Regel- und Auswerteeinheit 120. Diese ist im vorliegenden Beispiel als Elektronikeinheit auf einer Platine ausgestaltet, mit dem Funktionselement 110 mittels einem oder mehrerer Kabel, bzw. Drähte 160 elektrisch kontaktiert und beabstandet von dem Funktionselement 110 angeordnet. Ausführungsbeispiele der Funktion und der elektrischen Schaltung der Regel- und Auswerteeinheit werden in den Figuren 4 und 5 näher erläutert.

Des Weiteren weist der thermische Strömungssensor 1 einen Prozessanschluss 150 auf, an welchen das Röhrchen 130 und die Platine der Regel- und Auswerteeinheit 110 angebracht sind. Mittels des Gewindes des Prozessanschlusses 150 ist der thermische Strömungssensor in eine Öffnung einer Rohrleitung 2, welche von einem Messmedium 210 durchströmt wird, einbringbar und an der Rohrleitung 2 fixierbar. Bei dem Messmedium 210 handelt es sich insbesondere um ein gasförmiges oder um ein flüssiges Medium.

Fig. 2 zeigt ein Beispiel für eine Anwendung eines solchen erfindungsgemäßen thermischen Strömungssensors 1. Der thermische Strömungssensor 1 ist wie obig beschrieben in die Rohrleitung 2 eingebracht und an einer Wand von dieser fixiert. Die Rohrleitung 2 wird in Flussrichtung *̅v̅*̅ von dem Messmedium 210 durchströmt. Der thermische Strömungssensor 1 ist derart in die Rohrleitung 2 eingebracht, dass dieser senkrecht zur Flussrichtung *̅v̅*̅ in das Innere der Rohrleitung 2 hineinragt. Durch das Röhrchen 130, welches mit dem Messmedium 210 in Kontakt steht, ist das Funktionselement 110 von dem Messmedium 210 abgeschirmt. Das Funktionselement 110 ist derart ausgestaltet und an dem Boden des Röhrchens 130 angebracht, dass eine für den Betrieb des thermischen Strömungssensors 1 ausreichend gute Wärmeübertragung zwischen dem Funktionselement 110 und dem Messmedium 210 gewährleistet ist.

Fig. 3a zeigt eine nicht efindungsgemäße Ausgestaltung eines an der Rohrleitung 2 angebrachten Funktionselements 110 des thermischen Strömungssensors 1. Das Funktionselement 110 ist auf einem Substrat 140 aufgetragen. Das Funktionselement selbst ist von einer Passivierungsschicht 141 bedeckt ist.

Bei dem Funktionselement 110 handelt es sich um eine Schicht aus einem Material mit einem definierten Temperaturkoeffizienten des elektrischen Widerstands, welcher ungleich Null ist. Das Funktionselement 110 bildet daher, je nach Temperaturkoeffizient des verwendeten Materials, einen Kaltleiter(PTC)-Widerstand oder einen Heißleiter(NTC)-Widerstand. Insbesondere besteht das Funktionselement 110 aus einem metallischen Material, insbesondere Platin, Nickel, oder Kupfer, oder aus einem polykristallinen oder dotierten Halbleitermaterial, insbesondere Silizium, Germanium oder Galliumarsenid.

Das Funktionselement 110 dient zum Bestimmen der Temperatur des Messmediums 210, in dem der temperaturabhängige Widerstandswert des Funktionselements 110 bestimmt wird. Ebenso ist das Funktionselement dazu ausgestaltet, bei Beaufschlagung mit einer elektrischen Größe Joulesche Wärme zu erzeugen, welche an das Messmedium 210 abgegeben wird.

Die dem Messmedium 210 zugewandte Oberfläche des Substrats 140 ist mittels einer Lötschicht 142 an dem Röhrchen 130 befestigt.

Mittels Auswahl geeigneter Materialen für das Substrat 140, beispielsweise Aluminiumnitrid, welches eine sehr hohe Wärmeleitung aufweist, wird eine geringe Biot-Zahl zwischen dem Funktionselement 110 und dem Messmedium 210 erzielt. Durch Verringerung der Schichtdicke des Substrats 140 kann eine Biot-Zahl < 0.1 erreicht werden, was eine nahezu optimale Wärmeübertragung von dem Funktionselement 110 zum Messmedium 210 hin, bzw. umgekehrt, bedeutet.

Fig. 3b zeigt eine erfindungsgemäße Ausgestaltung eines an der Rohrleitung 2 angebrachten Funktionselements 110 des thermischen Strömungssensors 1.

Das Substrat 140 besteht aus Zirkonoxid mit einer Schichtdicke von ungefähr 150 µm. Dieses weist eine relativ geringe Wärmeleitfähigkeit auf.

Das Funktionselement 110 ist in diesem Beispiel auf der dem Messmedium 210 zugewandten Oberfläche des Substrats 140 aufgetragen. Auch in diesem Beispiel handelt es sich bei dem Funktionselement 110 um eine Schicht aus einem Material mit einem definierten Temperaturkoeffizienten des elektrischen Widerstands, welcher ungleich Null ist. Das Funktionselement 110 bildet daher, je nach Temperaturkoeffizient des verwendeten Materials, einen Kaltleiter(PTC)-Widerstand oder einen Heißleiter(NTC)-Widerstand. Insbesondere besteht das Funktionselement 110 aus einem metallischen Material, insbesondere Platin, Nickel, oder Kupfer, oder aus einem polykristallinen oder dotierten Halbleitermaterial, insbesondere Silizium, Germanium oder Galliumarsenid.

Auf dem Funktionselement 110 ist eine Passivierungsschicht 141 aufgetragen. In diesem Ausführungsbeispiel besteht die Passivierungsschicht 141 aus Al₂O₃ und besitzt eine Schichtdicke von ungefähr 3 µm. Die Passivierungsschicht 141 weist einen wesentlich geringeren, insbesondere mindestens um einen Faktor 10 kleineren, Wärmewiderstandswert als das Substrat 140 auf. Dadurch ist gewährleistet, dass ein Wärmefluss von dem Funktionselement 110 zu dem Messmedium 210, oder von dem Messmedium 210 zu dem Funktionselement 110 gerichtet ist und möglichst wenig Wärme durch das Substrat 140 verloren geht.

Die Passivierungsschicht 141 ist derart ausgestaltet, dass auf dieser eine lötbare Schicht 142 anbringbar ist und Substrat 140 mit dem Funktionselement 110 mittels dieser lötbaren Schicht 142 an dem Röhrchen 130 angebracht ist. Dies führt zu einer weiteren Verringerung der Biot-Zahl, da die lötbare Schicht 142 auf der Passivierungsschicht 141 mit dem Röhrchen 130 in unmittelbarem Kontakt steht.

Diese Ausgestaltung weist Biot-Zahl von kleiner 1 auf und erlaubt daher eine gute Wärmeleitung von dem Funktionselement 110 zu dem Messmedium 210 und umgekehrt.

In die dem Messmedium 210 abgewandte Seite des Substrats 140 kann eine oder mehrere Durchkontaktierungen 143 vorgesehen sein. Die Drähte 160 kontaktieren das Funktionselement 110 dadurch von der dem Funktionselement 110 gegenüberliegenden Seite des Substrats 140. Bei größerer Kontaktoberfläche des Funktionselements 110 mit dem Röhrchen 130 stellt sich bei gleichbleibender Chipdimensionierung ein größerer Wärmeübergang ein, bzw. verringert sich die Dimensionierung des Funktionselemente 110 bei gleichbleibender Kontaktoberfläche.

Alternativ dazu, dass das Funktionselement 110 als Dünnschicht, bzw. Dickschicht, auf das Substrat 140 aufgetragen ist, kann das Funktionselement auch ein gefertigtes Bauelement, beispielsweise ein Widerstandsthermometer PT50-PT200, sein, welches auf dem Boden des Röhrchens 130 aufgebracht ist, beispielsweise mittels Lötens.

Fig. 4 zeigt eine erste Ausgestaltung einer elektronischen Schaltung einer Regel-/Auswerteeinheit 120 für einen erfindungsgemäßen thermischen Strömungssensor 1. Die Regel- und Auswerteeinheit 120 dient dem Zweck, den thermischen Strömungssensor 1 getaktet in zwei Zeitintervallen, welche sich abwechseln, zu betreiben. In einem ersten Zeitintervall wird die Temperatur des Messmediums 210 bestimmt; in einem zweiten Zeitintervall wird die Strömungsgeschwindigkeit des Messmediums 210 bestimmt.

Die Steuerung der beiden Zeitintervalle wird von einem Mikroprozessor 121 vorgenommen. Im ersten Zeitintervall berechnet der Mikroprozessor 121 die Temperatur des Messmediums 210. Hierfür ermittelt der Mikroprozessor den aktuellen Widerstandswert des Funktionselements 110. Das Funktionselement 110 ist in Reihe zu einem Vorwiderstand 124 geschaltet und bildet mit diesem einen Spannungsteiler 122. Abhängig von der Temperatur des Messmediums 210 ändert sich der aktuelle Wert des Widerstands des Funktionselements 110. Der Mikroprozessor 121 bestimmt den Widerstandswert anhand der über dem Funktionselement 110 abfallenden Spannung und dem in dem Spannungsteiler 122 fließenden Strom, welcher aus dem bekannten Widerstandswert des Vorwiderstands 124 und dem über dem Vorwiderstand 124 abfallenden Spannungswert berechnet wird. Der Mikroprozessor 121 weist hierfür einen integrierten Analog-zu-Digital-Wandler mit zwei Eingängen 125, 126 auf: Einen Eingang 126 für die über dem gesamten Spannungsteiler abfallende Spannung und einen Eingang 125 für die über dem Funktionselement 110 abfallende Spannung. Zum Messen der Temperatur des Messmediums 210 wird der Spannungsteiler nur mit einem geringen Spannungswert, beispielsweise im Bereich von 0.1 - 1.0 V beaufschlagt. Der Analog-zu-Digital-Wandler kann alternativ als externes Element ausgestaltet sein, welches mit dem Mikroprozessor 121 verbunden ist.

Nach dem Bestimmen der Temperatur des Messmediums 210 in dem ersten Zeitintervall wird in dem zweiten Zeitintervall die Strömungsgeschwindigkeit des Messmediums 210 bestimmt. Hierfür sind zwei verschiedene Methoden anwendbar:
In einer ersten Variante wird das Funktionselement 110 derart mit einer elektrischen Größe beaufschlagt, dass ein vordefinierter Unterschied zwischen der aktuellen Temperatur des Funktionselements 110 und der im ersten Intervall gemessenen Temperatur des Messmedium 210 erzielt ist. Die Strömungsgeschwindigkeit des Messmediums 210 wird dann anhand der Höhe der dem Funktionselement beaufschlagten elektrischen Größe bestimmt, was der Regelart "Constant-Temperature Anemometry (CTA)" entspricht. Hierfür benötigt die Regel- und Auswerteeinheit 120 die aktuelle Temperatur des Messmediums 210, welche im ersten Zeitintervall bestimmt wurde.

Konkret wird das Funktionselement 110 im zweiten Zeitintervall mit einer elektrischen Größe, insbesondere einer Spannung, beaufschlagt. Die Höhe der elektrischen Spannung wird von einem Ausgang 127 eines im Mikroprozessor implementierten Digital-zu-Analog-Wandlers festgelegt. Der vom Ausgang 127 ausgegebene Spannungswert wird von einem Verstärkungselement 123 verstärkt. Gleichzeitig wird die aktuelle Temperatur des Funktionselements mittels den aktuell über den Eingängen 125, 126 abfallenden Spannungswerten bestimmt. Im Falle, dass die aktuelle Temperatur nicht dem Betrag der Differenz zu der Temperatur des Messmediums 210 entspricht, so ändert der Mikroprozessor die Höhe der elektrischen Spannung so lange, bis die vorbestimmte Differenz erreicht ist.

In einer zweiten Variante wird das Funktionselement 110 zumindest zeitweise mit einem definierten Betrag einer elektrischen Größe beaufschlagt. Nach dem Beaufschlagen des Funktionselements 110 mit der definierten elektrischen Leistung wird die Temperatur des Funktionselements 110 auf bekannte Art und Weise erfasst. Anhand der Höhe der Temperatur des Funktionselements 110 wird anschließend von dem Mikroprozessor 121 die Strömungsgeschwindigkeit des Messmediums ermittelt.

Fig. 5: eine zweite Ausgestaltung einer elektronischen Schaltung Regel-/Auswerteeinheit 121 für einen erfindungsgemäßen thermischen Strömungssensor.

Diese elektrische Schaltung unterscheidet sich von der in Fig. 4 gezeigten elektrischen Schaltung dadurch, dass diese kein externes Regelelement 123 umfasst. Das Regelelement wird als Anwendungssoftware in dem Mikroprozessor 121 ausgeführt. Der Mikroprozessor 121 weist ebenfalls die beiden zu Fig. 4 beschriebenen Eingänge 125, 126 auf. Der Vorwiderstand 124 ist in diesem Ausführungsbeispiel zwischen dem Funktionselement und Masse GND geschaltet und ist daher genau genommen ein "Nachwiderstand". Parallel zu dem Funktionselement 110 ist ein Schaltelement 128 geschaltet, welches auf Masse GND liegt. Das Schaltelement 128 ist mit dem Ausgang 127 eines Pulsweitenreglers des Mikroprozessors 121 verbunden und schließt sich bei jedem ausgehenden Puls. Die Frequenz der Pulse im zweiten Zeitintervall liegt beispielsweise in einem Bereich von 1 kHz bis 2 kHz.

Die Berechnung der Temperatur des Messmediums 210 erfolgt analog wie zu Fig. 4 beschrieben. Das Schaltelement ist hierbei geöffnet. Die am Spannungsteiler 122 anliegende Spannung VCC ist gering, beispielsweise in einem Bereich von 0.1 - 1.0 V.

Die Berechnung der Strömungsgeschwindigkeit des Messmediums erfolgt analog wie zu Fig. 4 beschrieben. Auch hier können beide Methoden eingesetzt werden. Die am Spannungsteiler 122 anliegende Spannung VCC wird erhöht, beispielsweise auf einen Bereich von 4.8 - 5 V. Die Höhe der eingehenden Leistung wird in diesem Fall über den Tastgrad der Pulse bestimmt. Wird das Funktionselement 110 in der selben Zeit mit mehr Pulsen beaufschlagt, so erhöht sich die von dem Funktionselement 110 erzeugte Wärme.

Der erfindungsgemäße Strömungssensor 1 weist eine Reihe von Vorteilen auf: Durch Nutzung von lediglich einem Funktionselement 110 ist der Platzbedarf des erfindungsgemäßen thermischen Strömungssensors 1 gegenüber einem Strömungssensor, welcher aus dem Stand der Technik bekannt ist und welcher zwei Funktionselemente nutzt, reduziert. Auch die Fertigungskosten für einen solchen erfindungsgemäßen thermischen Strömungssensor 1 sind reduziert.

Der erfindungsgemäße Strömungssensor 1 ist nicht auf die in den Fig. 1-5 gezeigten Ausführungsbeispiele beschränkt. Beispielsweise kann vorgesehen sein, dass die Regel- und Auswerteeinheit durch einen PC oder eine Bedieneinheit gebildet wird und nicht am eigentlichen Gehäuse des thermischen Strömungssensors 1 angebracht ist.

Nicht erfindungsgemäß kann auch vorgesehen sein, dass das Funktionselement 110, bzw. das Substrat 140 mit dem aufgebrachten Funktionselement 110 direkt mit dem Messmedium 210 in Kontakt steht und nicht in ein Trägerelement 130 eingebracht ist. Das Funktionselement 110, bzw. das Substrat 140 mit dem aufgebrachten Funktionselement 110 kann alternativ auch auf eine Wand der Rohrleitung 2 aufgebracht sein.

Es kann auch vorgesehen sein, dass das Funktionselement 110 nicht zum Erwärmen des Messmediums 210, sondern zum (temporären) Abkühlen des Messmediums 110 dient. In so einem Fall ist das Funktionselement beispielsweise als Peltierelement ausgestaltet. Die Schaltung der Regel- und Auswerteeinheit 120 bleibt hierbei nahezu identisch.

### Bezugszeichenliste

- 1: Thermischer Strömungssensor
- 110: Funktionselement
- 120: Regel- und Auswerteeinheit
- 121: Mikroprozessor
- 122: Spannungsteiler
- 123: Verstärkungselement
- 124: Vorwiderstand
- 125, 126: Eingänge des Mikroprozessors
- 127: Ausgang des Mikroprozessors
- 128: Schalterelement
- 130: Trägerelement
- 140: Substrat
- 141: Passivierungsschicht
- 142: lötbare Schicht
- 143: Durchkontaktierung
- 150: Prozessanschluss
- 160: Drähte
- 2: Rohrleitung
- 210: Messmedium
- GND: Masse
- VCC: Betriebsspannung
- *̅v̅*̅: Flussrichtung des Messmediums

## Patentansprüche

1. Thermischer Strömungssensor (1) zum Bestimmen der Temperatur und der Strömungsgeschwindigkeit eines strömenden Messmediums (210), umfassend:
- Ein Substrat (140) mit einem ersten Wärmewiderstandswert, mit einer dem Messmedium (210) zugewandten Oberfläche und mit einer dem Messmedium (210) abgewandten Oberfläche;
- ein Funktionselement (110), welches zum Bestimmen der Temperatur des Messmediums (210) und zum Beeinflussen der Temperatur des Messmediums (210) ausgestaltet ist, wobei das Funktionselement (110) auf der dem Messmedium (210) zugewandten Oberfläche des Substrats (140) aufgebracht ist, wobei auf dem Funktionselement (110) eine Passivierungsschicht (141) mit einem zweiten Wärmewiderstandswert aufgetragen ist,
wobei der erste Wärmewiderstandswert des Substrats (140) im Wesentlichen um einen Faktor von zumindest 10 größer ist als der zweite Wärmewiderstandswert der Passivierungsschicht (141), und
wobei auf der Passivierungsschicht (141) eine lötbare Schicht (142) aufgetragen ist;
- ein Trägerelement (130), in welches das Substrat (140) mit dem aufgebrachten Funktionselement (11) eingebracht ist, wobei das Trägerelement mit dem Messmedium in Kontakt steht und wobei das Funktionselement mittels der lötbaren Schicht an dem Trägerelement (130) angebracht ist; und
- eine Regel- und Auswerteeinheit (120), welche dazu ausgestaltet ist, in einem ersten Zeitintervall die Temperatur des Messmediums (210) mittels des Funktionselements (110) zu ermitteln und in einem dem ersten Zeitintervall nachfolgenden zweiten Zeitintervall die Strömungsgeschwindigkeit des Messmediums (210) zu ermitteln.

2. Thermischer Strömungssensor (1) nach Anspruch 1, wobei die Regel- und Auswerteeinheit (120) dazu ausgestaltet ist, in dem zweiten Zeitintervall das Funktionselement (110) derart mit einer elektrischen Größe zu beaufschlagen, dass das Funktionselement (110) eine Messtemperatur, welche um eine vorbestimmte Differenz verschieden zur Temperatur des Messmediums (210) ist, aufweist, und anhand der zum Erreichen der Messtemperatur des Funktionselements (110) erforderlichen elektrischen Größe die Strömungsgeschwindigkeit des Messmediums (210) zu ermitteln.

3. Thermischer Strömungssensor (1) nach Anspruch 1, wobei die Regel- und Auswerteeinheit (120) dazu ausgestaltet ist, in dem zweiten Zeitintervall das Funktionselement (110) zumindest zeitweise mit einem definierten Betrag einer elektrischen Größe zu beaufschlagen, nach dem Beaufschlagen des Funktionselements (110) mit dem definierten Betrag der elektrischen Größe die Temperatur des Funktionselements (110) zu erfassen, und anhand der Höhe der Temperatur des Funktionselements (110) die Strömungsgeschwindigkeit des Messmediums (210) zu ermitteln.

4. Thermischer Strömungssensor (1) nach zumindest einem der vorherigen Ansprüche, wobei es sich bei der Regel- und Auswerteeinheit (120) um einen PC oder um eine Bedieneinheit handelt.

5. Thermischer Strömungssensor (1) nach zumindest einem der Ansprüche 1 bis 3, wobei es sich bei der Regel- und Auswerteeinheit (120) um eine elektronische Sensorschaltung handelt, welche einen Mikroprozessor (121) oder einen Operationsverstärker aufweist.

6. Thermischer Strömungssensor (1) nach Anspruch 5, wobei der Mikroprozessor (121), bzw. der Operationsverstärker, zum Regeln der dem Funktionselement (110) zu beaufschlagenden elektrischen Größe ausgestaltet ist.

7. Thermischer Strömungssensor (1) nach zumindest einem der Ansprüche 5 und 6, wobei die elektronische Sensorschaltung einen Spannungsteiler (122) oder eine Brückenschaltung zum Bestimmen des Widerstandswerts des Funktionselements (110) umfasst.

8. Thermischer Strömungssensor (1) nach zumindest einem der vorherigen Ansprüche, wobei das Funktionselement (110) derart ausgestaltet ist, dass es durch Beaufschlagen der elektrischen Größe eine Messtemperatur aufweist, welche niedriger als die ermittelte Temperatur des Messmediums (210) ist.

9. Thermischer Strömungssensor (1) nach zumindest einem der Ansprüche 1 bis 7, wobei das Funktionselement (110) derart ausgestaltet ist, dass es durch Beaufschlagen der elektrischen Größe eine Messtemperatur aufweist, welche höher als die ermittelte Temperatur des Messmediums (210) ist.

10. Thermischer Strömungssensor (1) nach Anspruch 9, wobei es sich bei dem Funktionselement (110) um ein Widerstandsthermometer handelt, welches einen definierten Zusammenhang zwischen der Temperatur und des Widerstandswerts des Widerstandsthermometers aufweist, und/oder wobei das Funktionselement (110) im Wesentlichen aus einem Material mit einem definierten Temperaturkoeffizienten, insbesondere Platin, Nickel, oder Polysilizium, besteht.

11. Sensorsystem, umfassend einen thermischen Strömungssensor (1) nach zumindest einem der Ansprüche 1 bis 10, und zumindest ein weiteres Sensorelement, wobei die Regel- und Auswerteeinheit (120) derart ausgestaltet ist, den thermischen Strömungssensor (1) und das zumindest eine weitere Sensorelement anzusteuern, die Temperatur und die Strömungsgeschwindigkeit des Messmediums (210) mittels des thermischen Strömungssensors (1) zu bestimmen und zumindest eine weitere physikalische Messgröße mittels des zumindest einen weiteren Sensorelements zu bestimmen.

12. Sensorsystem nach Anspruch 11, wobei es sich bei dem weiteren Sensorelement um einen Leitfähigkeitssensor handelt und wobei es sich bei der weiteren physikalischen Messgröße um einen Leitfähigkeitswert des Messmediums (210) handelt, oder
wobei es sich bei weiteren Sensorelement um einen Feuchtesensor handelt und wobei es sich bei der weiteren physikalischen Messgröße um einen Feuchtewert handelt.

13. Verfahren zur Bestimmung der Temperatur und der Strömungsgeschwindigkeit eines Messmediums (210) mittels eines thermischen Strömungssensors (1) nach zumindest einem der Ansprüche 1 bis 10, , umfassend:
- Abwechselndes Messen der Temperatur des Mediums (210) mittels des Funktionselements (110) in einem ersten Zeitintervall und Bestimmen der Strömungsgeschwindigkeit des Messmediums (210) in einem dem ersten Zeitintervall nachfolgenden zweiten Zeitintervall.

14. Verfahren nach Anspruch 13, wobei das Funktionselement (110) im zweiten Zeitintervall derart mit einer elektrischen Größe beaufschlagt wird, dass ein vordefinierter Unterschied zwischen der aktuellen Temperatur des Funktionselements (110) und der im ersten Intervall gemessenen Temperatur des Messmedium (210) erzielt ist, und wobei die Strömungsgeschwindigkeit des Messmediums (210) anhand der Höhe der dem Funktionselement (110) beaufschlagten elektrischen Größe bestimmt wird.

15. Verfahren nach Anspruch 13, wobei das Funktionselement (110) im zweiten Zeitintervall mit einem definierten Betrag einer elektrischen Größe beaufschlagt wird, wobei nach dem Beaufschlagen die Temperatur des Funktionselements (110) gemessen wird und wobei die Strömungsgeschwindigkeit des Messmediums (210) anhand der Höhe der gemessenen Temperatur des Funktionselements (110) bestimmt wird.

## Claims

1. Thermal flow sensor (1) for determining the temperature and the flow velocity of a flowing medium, wherein said sensor comprises:
- a substrate (140) with a first thermal resistance value, with a surface facing towards the medium (210) and with a surface facing away from the medium (210);
- a functional element (110), which is designed to determine the temperature of the medium (210) and to influence the temperature of the medium (210), wherein the functional element (110) is applied to the surface of the substrate (140) facing towards the medium (210), wherein a passivation layer (141) with a second thermal resistance value is applied to the functional element (110),
wherein the first thermal resistance value of the substrate (140) is essentially greater by a factor of at least 10 than the second thermal resistance value of the passivation layer (141), and
wherein a weldable layer (142) is applied to the passivation layer (141);
- a support element (130) in which the substrate (140) with the applied functional element (11) is introduced, wherein the support element is in contact with the medium and the functional element is applied to the support element (130) by means of the weldable layer; and
- a control and evaluation unit (120), which is designed to determine - in a first time interval - the temperature of the medium (210) by means of the functional element (110) and to determine - in a second time interval following the first time interval - the flow velocity of the medium (210).

2. Thermal flow sensor (1) as claimed in Claim 1, wherein the control and evaluation unit (120) is designed to apply an electrical variable to the functional element (110) during the second time interval in such a way that the functional element (110) has a measured temperature which differs from the temperature of the medium (210) by a predetermined difference, and to determine the flow velocity of the medium (210) using the electrical variable needed to reach the measured temperature of the functional element (110).

3. Thermal flow sensor (1) as claimed in Claim 1, wherein the control and evaluation unit (120) is designed to apply a defined value of an electrical variable to the functional element (110), at least temporarily, in the second time interval, to measure the temperature of the functional element (110) after applying the defined value of the electrical variable to the functional element (110), and to determine the flow velocity of the medium (210) using the level of the temperature of the functional element (110).

4. Thermal flow sensor (1) as claimed in at least one of the previous claims, wherein the control and evaluation unit (120) is a PC or an operating unit.

5. Thermal flow sensor (1) as claimed in at least one of the Claims 1 to 3, wherein the control and evaluation unit (120) is an electronic sensor circuit which comprises a microprocessor (121) or an operational amplifier.

6. Thermal flow sensor (1) as claimed in Claim 5, wherein the microprocessor (121), or the operational amplifier is designed to regulate the electrical variable to be applied to the functional element (110).

7. Thermal flow sensor (1) as claimed in at least one of the Claims 5 and 6, wherein the electronic sensor circuit comprises a voltage divider (122) or a bridging circuit to determine the resistance value of the functional element (110).

8. Thermal flow sensor (1) as claimed in at least one of the previous claims, wherein the functional element (110) is designed in such a way that it has a measured temperature that is less than the determined temperature of the medium (210) as a result of the application of the electrical variable.

9. Thermal flow sensor (1) as claimed in at least one of the Claims 1 to 7, wherein the functional element (110) is designed in such a way that it has a measured temperature that is greater than the determined temperature of the medium (210) as a result of the application of the electrical variable.

10. Thermal flow sensor (1) as claimed in Claim 9, wherein the functional element (110) is a resistance thermometer, which has a defined relation between the temperature and the resistance value of the resistance thermometer, and/or wherein the functional element (110) is essentially made from a material with a defined temperature coefficient, particularly platinum, nickel or polysilicon.

11. Sensor system comprising a thermal flow sensor (1) as claimed in at least one of the Claims 1 to 10, and at least another sensor element, wherein the control and evaluation unit (120) is designed to control the thermal flow sensor (1) and the at least one other sensor element, to determine the temperature and the flow velocity of the medium (210) using the thermal flow sensor (1) and to determine at least another physical measured variable by means of the at least one other sensor element.

12. Sensor system as claimed in Claim 11, wherein the other sensor element is a conductivity sensor, and wherein the other physical measured variable is a conductivity value of the medium (210), or
wherein the other sensor element is a moisture sensor, and wherein the other physical measured variable is a moisture value.

13. Procedure designed to determine the temperature and the flow velocity of a medium (210) by means of a thermal flow sensor (1) as claimed in at least one of the Claims 1 to 10, wherein said procedure comprises the following steps:
- Alternating measurement of the temperature of the medium (210) by means the functional element (110) in a first time interval and determination of the flow velocity of the medium (210) in a second time interval following the first time interval.

14. Procedure as claimed in Claim 13, wherein an electrical variable is applied to the functional element (110) in the second time interval in such a way that a predefined difference is obtained between the current temperature of the functional element (110) and the temperature of the measured medium (210) in the first interval, and the flow velocity of the medium (210) is determined using the value of the electrical variable applied to the functional element (110).

15. Procedure as claimed in Claim 13, wherein a defined quantity of an electrical variable is applied to the functional element (110) in the second time interval, wherein, after the application, the temperature of the functional element (110) is measured and the flow velocity of the medium (210) is determined using the level of the measured temperature of the functional element (110).

## Revendications

1. Capteur d'écoulement thermique (1) destiné à la détermination de la température et de la vitesse d'écoulement d'un produit qui s'écoule, lequel capteur comprend :
- un substrat (140) avec une première valeur de résistance thermique, avec une surface tournée vers le produit (210) et avec une surface opposée au produit (210) ;
- un élément fonctionnel (110), lequel est conçu pour déterminer la température du produit (210) et pour influencer la température du produit (210), l'élément fonctionnel (110) étant appliqué sur la surface du substrat (140) tournée vers le produit (210), une couche de passivation (141) avec une deuxième valeur de résistance thermique étant appliquée sur l'élément fonctionnel (110),
la première valeur de résistance thermique du substrat (140) étant pour l'essentiel supérieure d'un facteur d'au moins 10 à la deuxième valeur de résistance thermique de la couche de passivation (141), et
une couche soudable (142) étant appliquée sur la couche de passivation (141) ;
- un élément de support (130) dans lequel est introduit le substrat (140) avec l'élément fonctionnel (11) appliqué, l'élément de support étant en contact avec le produit et l'élément fonctionnel étant appliqué sur l'élément de support (130) au moyen de la couche soudable ; et
- une unité de régulation et d'exploitation (120), laquelle est conçue pour déterminer, dans un premier intervalle de temps, la température du produit (210) au moyen de l'élément fonctionnel (110) et pour déterminer, dans un deuxième intervalle de temps suivant le premier intervalle de temps, la vitesse d'écoulement du produit (210).

2. Capteur d'écoulement thermique (1) selon la revendication 1, pour lequel l'unité de régulation et d'exploitation (120) est conçue pour solliciter l'élément fonctionnel (110) avec une grandeur électrique pendant le deuxième intervalle de temps de telle sorte que l'élément fonctionnel (110) présente une température de mesure qui diffère d'une différence prédéterminée de la température du produit (210), et pour déterminer la vitesse d'écoulement du produit (210) à l'aide de la grandeur électrique nécessaire pour atteindre la température de mesure de l'élément fonctionnel (110).

3. Capteur d'écoulement thermique (1) selon la revendication 1, pour lequel l'unité de régulation et d'exploitation (120) est conçue pour solliciter l'élément fonctionnel (110) au moins temporairement avec une valeur définie d'une grandeur électrique dans le deuxième intervalle de temps, pour mesurer la température de l'élément fonctionnel (110) après la sollicitation de l'élément fonctionnel (110) avec la valeur définie de la grandeur électrique, et pour déterminer la vitesse d'écoulement du produit (210) à l'aide de la hauteur de la température de l'élément fonctionnel (110).

4. Capteur d'écoulement thermique (1) selon au moins l'une des revendications précédentes, pour lequel l'unité de régulation et d'exploitation (120) est un PC ou une unité de commande.

5. Capteur d'écoulement thermique (1) selon au moins l'une des revendications 1 à 3, pour lequel l'unité de régulation et d'exploitation (120) est un circuit électronique de capteur qui comprend un microprocesseur (121) ou un amplificateur opérationnel.

6. Capteur d'écoulement thermique (1) selon la revendication 5, pour lequel le microprocesseur (121), ou l'amplificateur opérationnel, est conçu pour réguler la grandeur électrique sollicitant l'élément fonctionnel (110).

7. Capteur d'écoulement thermique (1) selon au moins l'une des revendications 5 et 6, pour lequel le circuit électronique de capteur comprend un diviseur de tension (122) ou un circuit en pont pour déterminer la valeur de résistance de l'élément fonctionnel (110).

8. Capteur d'écoulement thermique (1) selon au moins l'une des revendications précédentes, pour lequel l'élément fonctionnel (110) est conçu de telle sorte qu'il présente une température de mesure qui est inférieure à la température déterminée du produit (210) en raison de l'application de la grandeur électrique.

9. Capteur d'écoulement thermique (1) selon au moins l'une des revendications 1 à 7, pour lequel l'élément fonctionnel (110) est conçu de telle sorte qu'il présente une température de mesure qui est supérieure à la température déterminée du produit (210) en raison de l'application de la grandeur électrique.

10. Capteur d'écoulement thermique (1) selon la revendication 9, pour lequel l'élément fonctionnel (110) est un thermomètre à résistance, qui présente une relation définie entre la température et la valeur de résistance du thermomètre à résistance, et/ou
pour lequel l'élément fonctionnel (110) est pour l'essentiel constitué d'un matériau présentant un coefficient de température défini, notamment du platine, du nickel ou du polysilicium.

11. Système de capteur comprenant un capteur d'écoulement thermique (1) selon au moins l'une des revendications 1 à 10, et au moins un autre élément capteur, l'unité de régulation et d'exploitation (120) étant conçue de manière à commander le capteur d'écoulement thermique (1) et l'au moins un autre élément capteur, à déterminer la température et la vitesse d'écoulement du produit (210) au moyen du capteur d'écoulement thermique (1) et à déterminer au moins une autre grandeur de mesure physique au moyen de l'au moins un autre élément capteur.

12. Système de capteur selon la 11, pour lequel l'autre élément capteur est un capteur de conductivité, l'autre grandeur de mesure physique étant une valeur de conductivité du produit (210), ou
pour lequel l'autre élément capteur est un capteur d'humidité, l'autre grandeur de mesure physique étant une valeur d'humidité.

13. Procédé destiné à la détermination de la température et de la vitesse d'écoulement d'un produit (210) au moyen d'un capteur d'écoulement thermique (1) selon au moins l'une des revendications 1 à 10, lequel procédé comprend les étapes suivantes :
- Mesure alternative de la température du produit (210) au moyen de l'élément fonctionnel (110) dans un premier intervalle de temps et détermination de la vitesse d'écoulement du produit (210) dans un deuxième intervalle de temps suivant le premier intervalle de temps.

14. Procédé selon la revendication 13, pour lequel l'élément fonctionnel (110) est sollicité dans le deuxième intervalle de temps avec une grandeur électrique de telle sorte qu'une différence prédéfinie est obtenue entre la température actuelle de l'élément fonctionnel (110) et la température du produit (210) mesurée dans le premier intervalle, et la vitesse d'écoulement du produit (210) étant déterminée à l'aide de la valeur de la grandeur électrique sollicitant l'élément fonctionnel (110).

15. Procédé selon la revendication 13, pour lequel l'élément fonctionnel (110) est sollicité dans le deuxième intervalle de temps avec une quantité définie d'une grandeur électrique, la température de l'élément fonctionnel (110) étant mesurée après la sollicitation et la vitesse d'écoulement du produit (210) étant déterminée à l'aide de la hauteur de la température mesurée de l'élément fonctionnel (110).
